# DEMANDE DE BREVET EUROPEEN

(11) **EP 4 390 500 A1**
(43) Date de publication de la demande: **26.06.2024**
(21) Numéro de dépôt: 23203933.9
(22) Date de dépôt: 17.10.2023
(51) Int. Cl.: G02B 26/08, A61B 3/14, G06V 40/18, H04N 23/58, G03B 37/02, G03B 17/17

(54) **SYSTÈME D'ACQUISITION D'IMAGE POUR LA RECONNAISSANCE BIOMÉTRIQUE D'IRIS D'UN INDIVIDU**

(30) Priorité: 23.12.2022 FR 2214375
(71) Demandeur: IDEMIA Identity & Security France, 92400 Courbevoie (FR)
(72) Inventeur: SIWEK, Jean-Francois, 92400 Courbevoie (FR); NGUYEN, Dorian, 92400 Courbevoie (FR); TEYROL, Jean-Michel, 92400 Courbevoie (FR); AIT BOUHOU, Rahma, 92400 Courbevoie (FR)
(74) Mandataire: Idemia

(57) **Abrégé**

Système d'acquisition d'image (20), comportant un support (21) et un sous-système (30) monté sur le support (21), ledit sous-système (30) comportant un dispositif d'acquisition d'image (40) configuré pour acquérir au moins une image selon un axe de visée (D1), un élément réfléchissant (60) agencé transversalement audit axe de visée (D1) et configuré pour réfléchir l'au moins une image sur ledit dispositif d'acquisition d'image (40), ledit élément réfléchissant (60) étant monté mobile en rotation, selon un premier axe de rotation (D2), par rapport audit dispositif d'acquisition d'image, le premier axe de rotation (D2) étant orthogonal audit axe de visée (D1) dudit dispositif d'acquisition d'image (40) et dans lequel ledit sous-système (30) est monté mobile en rotation par rapport audit support (21) selon un deuxième axe de rotation (D3), le deuxième axe de rotation (D3) étant parallèle audit axe de visée (D1) dudit dispositif d'acquisition d'image (40).

## Description

L'invention concerne un système d'acquisition d'image.

Elle concerne plus particulièrement un système d'acquisition d'image pour la reconnaissance biométrique, notamment la reconnaissance biométrique d'iris d'un individu, éventuellement un individu en mouvement

L'invention s'applique, notamment, à des domaines techniques tels que la sécurité pour le suivi et la reconnaissance d'informations notamment biométriques, telles que des iris, d'un individu.

Un système d'acquisition d'image pour le suivi et la reconnaissance biométrique d'une iris d'un individu, immobile ou en mouvement, comporte typiquement une caméra montée parallèlement à un support selon un axe de visée de la caméra, un premier moteur configuré pour orienter la caméra selon un axe de rotation considéré comme « vertical » permettant à la caméra d'effectuer un mouvement horizontal de rotation, dit « panoramique », et un second moteur configuré pour orienter la caméra selon un axe de rotation considéré comme « horizontal » permettant à la caméra d'effectuer un mouvement vertical de rotation, orientant ainsi son inclinaison, aussi dit mouvement de « tilt ».

Dans ce système, les deux mouvements en rotation de la caméra (en panoramique et inclinaison) par rapport au support peuvent être combinés pour obtenir un champ de capture sous forme de cône à base rectangulaire.

Or, au moins un inconvénient d'un tel système d'acquisition d'image est de présenter un encombrement relativement important dans le plan du support résultant de la disposition de la caméra parallèlement au support.

Un autre système d'acquisition d'image pour le suivi et la reconnaissance biométrique d'une iris d'un individu, immobile ou en mouvement, comporte typiquement une caméra montée fixement et agencée perpendiculairement à un support selon l'axe de visée de la caméra, un miroir positionné en face de la caméra et transversal à l'axe de visée de la caméra, le miroir étant motorisé selon deux axes de rotation par rapport à l'axe de visée de la caméra, permettant ainsi au miroir d'effectuer un mouvement horizontal de rotation, dit « panoramique » et un mouvement vertical de rotation, dit « tilt ».

Dans un tel système, les deux mouvements en rotation du miroir peuvent être combinés pour obtenir un champ de capture sous forme de cône à base rectangulaire. Dans un tel système, la caméra comporte typiquement un objectif et un capteur, sur lequel l'objectif envoie une image.

Un tel système d'acquisition d'image présente l'avantage d'un encombrement relativement réduit dans le plan du support par rapport au système d'acquisition d'image préalablement présenté.

Néanmoins, au moins un inconvénient d'un tel système d'acquisition d'image est de présenter un champ de capture limité, notamment en comparaison du précédent système d'acquisition d'image présenté.

En effet, notamment le mouvement horizontal de rotation, dit en « panoramique », du miroir par rapport à l'axe de visée de la caméra engendre une rotation de l'image réfléchie par le miroir par rapport au centre du capteur de la caméra.

L'image réfléchie par le miroir ne se retrouve alors plus sur la même ligne horizontale du capteur de la caméra.

Ainsi, plus l'angle de rotation est grand lors du mouvement en panoramique du miroir, plus le risque d'obtenir une image, notamment des yeux et/ou des iris d'un individu, partiellement ou complétement en dehors du capteur de la caméra est important. Ceci est notamment dû au fait qu'un capteur de caméra est typiquement de format rectangulaire et non circulaire, et a un dimensionnement standardisé et généralement limité en encombrement.

Par conséquent, une telle rotation de l'image réfléchie par le miroir sur le capteur lors d'un mouvement panoramique engendre une limitation du champ de capture de la caméra.

De plus, l'image perçue par le capteur est alors déformée. La rotation de l'image réfléchie sur le capteur de la caméra nécessite alors une étape supplémentaire lors du traitement de l'image fournie par le système d'acquisition d'image.

La présente invention vise à pallier au moins en partie ces inconvénients, menant éventuellement à d'autres avantages.

A cet effet, est proposé, selon un premier aspect, un système d'acquisition d'image comportant un support et un sous-système monté sur le support, ledit sous-système comportant un dispositif d'acquisition d'image configuré pour acquérir au moins une image selon un axe de visée, un élément réfléchissant agencé transversalement audit axe de visée et configuré pour réfléchir l'au moins une image sur ledit dispositif d'acquisition d'image, ledit élément réfléchissant étant monté mobile en rotation, selon un premier axe de rotation, par rapport audit dispositif d'acquisition d'image, le premier axe de rotation étant orthogonal audit axe de visée dudit dispositif d'acquisition d'image et dans lequel ledit sous-système est monté mobile en rotation par rapport audit support selon un deuxième axe de rotation, le deuxième axe de rotation étant parallèle audit axe de visée dudit dispositif d'acquisition d'image.

Le système d'acquisition d'image selon l'invention permet d'acquérir au moins une image d'un individu, par exemple une image d'un visage entier, éventuellement haute résolution, voire notamment des yeux, par exemple des iris, si besoin au cours du déplacement de l'individu.

L'élément réfléchissant est agencé pour avoir un unique axe de liberté en rotation par rapport au dispositif d'acquisition d'image.

L'agencement de l'élément réfléchissant par rapport au dispositif d'acquisition d'image, permet au système d'acquisition d'image d'acquérir au moins une image lors d'un mouvement vertical de rotation selon le premier axe de rotation, dit « tilt », de l'élément réfléchissant par rapport au dispositif d'acquisition d'image.

L'agencement du sous-système par rapport au support permet au système d'acquisition d'image d'acquérir au moins une image lors d'un mouvement horizontal de rotation selon le deuxième axe de rotation, dit « panoramique », du sous-système par rapport au support.

Les deux mouvements, vertical et horizontal, de rotation sont combinables pour obtenir un champ de capture sous forme de cône à base rectangulaire.

Dans d'autres termes, l'agencement global du système d'acquisition d'image permet de garantir, notamment lors d'un mouvement panoramique du sous-système selon le deuxième axe de rotation, que les images réfléchies par l'élément réfléchissant sur le dispositif d'acquisition d'image conservent la même orientation angulaire par rapport audit axe de visée dudit dispositif d'acquisition d'image.

Ainsi, par rapport à un système d'acquisition d'image de l'état de la technique, le système d'acquisition d'image selon un exemple de mise en oeuvre de l'invention dispose d'un encombrement relativement réduit dans le plan du support, notamment dans le sens de la profondeur du système, tout en permettant un relativement plus grand champ de capture d'image en panoramique.

Par exemple, l'élément réfléchissant est configuré pour avoir une plage de débattement selon le premier axe de rotation de 70°.

Dans d'autres termes, l'élément réfléchissant est configuré pour avoir notamment un débattement de plus ou moins 35° par rapport à une position de centrage nominal à 45° selon un plan nominal incluant le premier axe et étant orthogonal à l'axe de visée du dispositif d'acquisition d'image.

Par exemple, le sous-système est configuré pour avoir une plage de débattement selon le deuxième axe de rotation de 40°.

Dans un mode de réalisation, le deuxième axe de rotation est confondu à l'axe de visée du dispositif d'acquisition d'image, ce qui est avantageux pour le pilotage.

Dans un mode de réalisation, ledit dispositif d'acquisition d'image comporte au moins une première unité d'acquisition d'image, ladite au moins une première unité d'acquisition d'image comportant un capteur et un objectif, l'objectif focalisant l'au moins une image sur le capteur, l'objectif définissant un axe optique de la première unité d'acquisition d'image.

Par exemple, ledit axe optique de ladite au moins une première unité d'acquisition d'image est parallèle audit axe de visée dudit dispositif d'acquisition d'image.

Par exemple, ledit axe optique de ladite au moins une première unité d'acquisition d'image diverge dudit axe de visée dudit dispositif d'acquisition d'image selon un angle d'écartement de valeur prédéterminé.

Dans un mode de réalisation, ledit dispositif d'acquisition d'image comporte au moins une deuxième unité d'acquisition d'image, ladite deuxième unité d'acquisition d'image comportant un capteur et un objectif, l'objectif de la deuxième unité d'acquisition d'image focalisant l'au moins une image sur le capteur de la deuxième unité d'acquisition d'image, l'objectif de la deuxième unité d'acquisition d'image définissant un axe optique de la deuxième unité d'acquisition d'image.

Ces deux unités d'acquisition d'image permettent de couvrir un champ plus large et notamment d'acquérir au même instant les deux yeux d'une personne, rendant plus facile de distinguer l'oeil gauche et l'oeil droit.

Dans un mode de réalisation, l'axe optique d'au moins la première unité d'acquisition d'image ou la deuxième unité d'acquisition d'image diverge par rapport audit axe de visée dudit dispositif d'acquisition d'image selon un angle d'écartement d'une valeur prédéterminée.

En d'autres termes, au moins la première ou la deuxième unité d'acquisition d'image est agencée de sorte à être inclinée, notamment à diverger, par rapport à l'axe de visée du dispositif d'acquisition d'image.

Cet agencement forme un angle d'écartement entre l'axe optique de la première ou la deuxième unité d'acquisition d'image et l'axe de visée du dispositif d'acquisition d'image.

Dans un exemple de réalisation, la première unité d'acquisition d'image et la deuxième unité d'acquisition d'image sont agencées de sorte à diverger, par rapport à l'axe de visée du dispositif d'acquisition d'image.

L'angle d'écartement entre l'axe optique de la première unité d'acquisition d'image et l'axe de visée du dispositif d'acquisition d'image peut être égal à l'angle d'écartement entre l'axe optique de la deuxième unité d'acquisition d'image et l'axe de visée du dispositif d'acquisition d'image.

La disposition de la deuxième unité d'acquisition d'image est ainsi symétrique à celle de la première unité d'acquisition d'image par rapport à l'axe de visée.

Cet angle d'écartement permet ainsi de faire diverger l'axe optique des au moins une première et deuxième unités d'acquisition d'image par rapport à l'axe de visée du dispositif d'acquisition d'image.

Cet angle d'écartement permet notamment de faire diverger l'axe optique des au moins une première et deuxième unités d'acquisition d'image entre eux.

Une telle divergence des axes optiques permet ainsi d'augmenter le champ de capture dudit dispositif d'acquisition d'image, tout en conservant un recouvrement des champs de capture desdites au moins une première et deuxième unités d'acquisition d'image. Par exemple, la valeur de l'angle d'écartement est choisie pour obtenir un champ de capture dudit dispositif d'acquisition d'image permettant la capture au même instant des deux yeux d'un individu y compris à une distance minimale de fonctionnement du système d'acquisition d'image, par exemple de 50 cm, voire moins.

En effet, plus un individu est proche du système d'acquisition d'image, plus il peut être difficile d'acquérir une image des deux yeux simultanément. Plus un individu est proche du système d'acquisition d'image, plus un champ de vision du système d'acquisition d'image doit être large.

La disposition d'au moins deux unités d'acquisition d'image divergeant permet ainsi d'élargir ce champ.

Par exemple, la valeur de l'angle d'écartement est choisie pour obtenir un recouvrement des champs de capture des unités d'acquisition d'image évitant la présence d'une zone aveugle dans l'image reconstituée à partir de l'au moins une image fournie par l'au moins une première et deuxième unités d'acquisition d'image. Par exemple, la valeur de l'angle d'écartement entre l'axe optique de la première ou la deuxième unité d'acquisition d'image et l'axe de visée est comprise entre 1,4° et 1,5°, par exemple entre 1,45° et 1,5°.

Par exemple, les capteurs de l'au moins une première et deuxième unités d'acquisition d'image sont positionnés au plus proche de l'axe de visée du dispositif d'acquisition d'image, tout en évitant que les objectifs de l'au moins une première et deuxième unités d'acquisition d'image ne se touchent.

Par exemple, une distance entre un centre du capteur de l'au moins une première unité d'acquisition d'image et celui de la deuxième unité d'acquisition d'image dépend de la formule optique des objectifs de l'au moins une première et de l'au moins une deuxième unités d'acquisition d'image.

Par exemple cette distance est comprise entre 20 mm et 25 mm, par exemple d'environ 23 mm.

Dans un mode de réalisation, ledit dispositif d'acquisition d'image comporte au moins une deuxième unité d'acquisition d'image, ladite deuxième unité d'acquisition d'image comportant un capteur et un objectif, l'objectif de la deuxième unité d'acquisition d'image focalisant l'au moins une image sur le capteur de la deuxième unité d'acquisition d'image, l'objectif de la deuxième unité d'acquisition d'image définissant un axe optique de la deuxième unité d'acquisition d'image, et dans lequel l'axe optique de ladite première unité d'acquisition d'image et l'axe optique de ladite deuxième unité d'acquisition d'image divergent par rapport audit axe de visée dudit dispositif d'acquisition d'image selon un angle d'écartement d'une valeur prédéterminée.

Dans un mode de réalisation, ledit dispositif d'acquisition d'image comporte un support plié comportant au moins deux volets, un premier des deux volets supportant le capteur de la première unité d'acquisition d'image et un deuxième des deux volets supportant le capteur de la deuxième unité d'acquisition d'image, lesdits au moins deux volets étant reliés l'un à l'autre par au moins une zone charnière, ladite zone charnière étant configurée pour que lesdits deux volets forment entre eux un angle de pliage. L'au moins une zone charnière du support plié permet au support plié d'adopter un angle de pliage de valeur déterminée de sorte à incliner les au moins deux volets du support plié entre eux.

Ainsi, l'au moins une zone charnière permet de réaliser la divergence des axes optiques des au moins une première et deuxième unités d'acquisition d'image en appliquant un angle de pliage entre les volets qui supportent les capteurs desdits au moins une première et deuxième unités d'acquisition d'image.

Par exemple, le support plié est une plaque de circuit imprimé, dite « PCB » (pour « printed circuit board »).

Par exemple, l'au moins une zone charnière du support plié est flexible, ou courbable.

Par exemple, les au moins deux volets du support plié sont rigides.

Par exemple, l'au moins une zone charnière du support plié a une épaisseur amincie par rapport à l'épaisseur des au moins deux volets.

Dans un mode de réalisation, ledit dispositif d'acquisition d'image comporte un dispositif de translation configuré pour translater au moins ledit objectif de ladite au moins une première unité d'acquisition d'image par rapport audit capteur de ladite au moins une première unité d'acquisition d'image selon ledit axe de visée dudit dispositif d'acquisition d'image.

Le dispositif de translation permet d'ajuster la distance optique de l'au moins une première unité d'acquisition d'image.

En d'autres termes, le dispositif de translation permet d'ajuster la distance entre le capteur et l'objectif de l'au moins une première unité d'acquisition d'image par un mouvement simple de translation parallèlement à l'axe de visée du dispositif d'acquisition d'image.

Dans un mode de réalisation, ledit dispositif de translation comporte une glissière configurée pour supporter ledit objectif de l'au moins une première unité d'acquisition d'image.

Dans un mode de réalisation, ledit dispositif de translation comporte un moteur pas à pas et une vis sans fin, ledit moteur étant configuré pour entrainer en rotation ladite vis sans fin, et ladite vis sans fin étant configurée pour faire translater ladite glissière selon l'axe de visée dudit dispositif d'acquisition d'image.

Dans un mode de réalisation, ledit dispositif de translation est en outre configuré pour translater ledit objectif de ladite au moins une deuxième unité d'acquisition d'image par rapport audit capteur de ladite au moins une deuxième unité d'acquisition d'image selon ledit axe de visée dudit dispositif d'acquisition d'image.

Le dispositif d'acquisition d'image permet ainsi l'ajustement de la distance optique des au moins une première et seconde unités d'acquisition d'image, c'est-à-dire d'ajuster la distance entre le capteur et l'objectif de chaque unité d'acquisition d'image, par un unique mouvement de translation des objectifs des au moins une première et seconde unités d'acquisition d'image.

Dans un mode de réalisation, ladite glissière est en outre configurée pour supporter les objectifs de l'au moins une première et seconde unités d'acquisition d'image, ce qui permet notamment de les translater ensemble.

Dans un mode de réalisation, ledit système d'acquisition d'image comporte un moteur d'élément réfléchissant configuré pour pivoter ledit élément réfléchissant par rapport audit dispositif d'acquisition d'image selon ledit premier axe de rotation.

Par exemple, le moteur d'élément réfléchissant est un moteur à entraînement en prise directe de charge.

Un moteur à entraînement en prise directe de charge est configuré pour que la charge supportée par un moteur soit directement solidaire du rotor du moteur.

Un tel moteur permet d'éviter d'introduire un jeu entre l'axe de rotation du moteur et la charge supportée par le moteur.

Un tel moteur permet une meilleure précision du mouvement de rotation.

Un tel moteur permet une réduction de bruit.

Un tel moteur permet une réduction de l'usure du moteur conduisant à une amélioration de sa durée de vie.

Par exemple, le moteur d'élément réfléchissant est un moteur à entraînement en prise directe de charge sans balais.

Un tel moteur permet de diminuer l'usure et d'avoir un pilotage très fluide, apte à répondre au besoin de suivi des yeux d'une personne en mouvement.

Dans un mode de réalisation, ledit système d'acquisition d'image comporte un moteur de sous-système configuré pour pivoter ledit sous-système par rapport audit support selon ledit deuxième axe de rotation.

Par exemple, le moteur de sous-système est un moteur à entraînement en prise direct de charge.

Par exemple, le moteur de sous-système est un moteur à entraînement en prise directe de charge sans balais.

Par exemple, en variante, le mouvement horizontal de rotation selon l'axe de rotation D3, dit « panoramique », du sous-système par rapport au support est assuré manuellement par un opérateur du système d'acquisition d'image.

Dans un mode de réalisation, ledit système d'acquisition d'image comporte un moteur d'élément réfléchissant configuré pour pivoter ledit élément réfléchissant selon ledit premier axe de rotation et un moteur de sous-système configuré pour pivoter ledit sous-système selon ledit deuxième axe de rotation.

Dans un mode de réalisation, le support comporte une interface électrique et le sous-système comporte une interface électrique, et le système d'acquisition d'image comporte un élément de raccordement flexible configuré pour raccorder électriquement l'interface électrique dudit support à l'interface électrique dudit sous-système, ledit élément de raccordement flexible étant agencé autour dudit deuxième axe de rotation. L'élément de raccordement flexible permet de raccorder les interfaces électriques du support et du sous-système tout en accompagnant le mouvement horizontal de rotation du sous-système, par rapport au support, par une flexion de l'élément de raccordement autour du deuxième axe de rotation.

Dans d'autres termes, l'élément de raccordement flexible vient s'enrouler et se dérouler autour du deuxième axe de rotation, ou notamment autour du moteur de sous-système.

La flexion de l'élément de raccordement flexible autour d'un seul axe permet ainsi d'augmenter sa durée de vie, limitant, voire évitant, les flexions selon deux axes différents, et/ou des torsions.

Un avantage d'un tel système d'acquisition d'image comprenant un tel élément de raccordement est de ne pouvoir avoir qu'un unique câble en mouvement.

Par exemple, l'élément de raccordement flexible est agencé autour du moteur de sous-système.

Par exemple, ledit élément de raccordement flexible permet la transmission de divers signaux, tels que l'alimentation électrique, des signaux vidéo, ou encore des signaux de pilotage des moteurs.

Par exemple, l'élément de raccordement flexible est un câble ou un cordon.

Par exemple, l'interface électrique du support permet la communication avec une unité de commande.

Par exemple, l'interface électrique du sous-système permet la communication avec le dispositif d'acquisition d'image, le moteur d'élément réfléchissant, le moteur de sous-système et notamment le moteur pas à pas.

Dans un mode de réalisation, ledit système d'acquisition d'image comporte un élément de guidage élastique agencé autour dudit élément de raccordement flexible, ledit élément de guidage élastique comportant une première extrémité liée audit support et une seconde extrémité liée audit sous-système, ledit élément de guidage élastique étant configuré pour être déformé élastiquement lors d'une rotation du sous-système selon le deuxième axe de rotation par rapport au support.

Ledit élément de guidage élastique permet d'assurer le maintien de l'élément de raccordement flexible indépendamment de la force de gravité s'exerçant sur ledit élément de raccordement flexible.

Le maintien de l'élément de raccordement flexible par l'élément de guidage élastique permet d'éviter un affaissement de l'élément de raccordement flexible.

Le maintien de l'élément de raccordement flexible par l'élément de guidage élastique permet d'éviter un contact de l'élément de raccordement flexible avec d'autres parties du système d'acquisition d'image, un tel contact engendrant notamment des frottements sur ledit élément de raccordement flexible.

L'élément de guidage élastique permet de contrôler la flexion de l'élément de raccordement flexible.

L'élément de guidage élastique permet que les contraintes engendrées lors du mouvement de flexion dudit élément de raccordement flexible s'exercent en priorité sur ledit élément de guidage élastique plutôt que sur l'élément de raccordement flexible. Sous l'effet des contraintes engendrées par le mouvement de rotation du sous-système autour du deuxième axe de rotation, l'élément de guidage élastique se déforme élastiquement.

Ainsi, un tel élément de guidage élastique permet d'augmenter la durée de vie dudit élément de raccordement.

Par exemple, l'élément de guidage est fixé par ses extrémités au support et au sous-système par des brides, ou des colliers de serrages.

Dans un mode de réalisation, ledit élément de guidage élastique est un ressort. L'utilisation d'un ressort, comportant un nombre de spires déterminé, comme élément de guidage élastique permet de fournir un nombre de points de contact avec l'élément de raccordement flexible en fonction du nombre de spires du ressort.

Un nombre élevé de points de contact entre l'élément de guidage élastique et l'élément de raccordement flexible permet de mieux répartir les contraintes sur l'ensemble de l'élément de raccordement flexible.

Par exemple, pour déterminer le nombre de spires du ressort, une distance nominale entre deux spires consécutives du ressort est approximativement égale à un diamètre de l'élément de raccordement flexible.

Dans un mode de réalisation, le capteur de l'au moins une première unité d'acquisition d'image, et/ou de l'au moins une deuxième unité d'acquisition d'image, est un capteur de type obturateur global, dit « global shutter ».

Un capteur de type « global shutter » permet d'éclairer uniquement pendant un temps d'exposition.

Un capteur de type « global shutter » permet d'éclairer de manière plus intense et pendant une durée globale plus courte en comparaison d'un capteur de type obturateur déroulant, dit « rolling shutter ».

Un capteur de type « global shutter » permet de réduire le flou de bougé du dispositif d'acquisition d'image en comparaison d'un capteur de type « rolling shutter ».

Un capteur de type « global shutter » permet de garantir un niveau de signal suffisant et un bruit limité en comparaison d'un capteur de type « rolling shutter ».

Un capteur de type « global shutter » permet de rendre l'au moins une unité d'acquisition d'image moins sensible à des longueurs d'ondes en infrarouge potentiellement présentes dans l'environnement lumineux dudit système d'acquisition d'image en comparaison avec un capteur de type « rolling shutter ».

Dans un mode de réalisation, ledit système d'acquisition d'image comporte au moins un dispositif d'acquisition d'image contextuelle configuré pour acquérir au moins une image de contexte, ledit au moins un dispositif d'acquisition d'image contextuelle étant fixé audit support.

Une image de contexte désigne ici une image représentant une vue d'ensemble d'un champ de capture, et permet de choisir et localiser plus précisément un détail, par exemple en l'occurrence un visage voire des yeux d'un individu. L'au moins un dispositif d'acquisition d'image du système selon l'invention est ensuite configuré pour pointer sur ce détail.

Dans un exemple particulier, disposer de deux dispositifs d'acquisition d'image contextuelle permet d'avoir une localisation en trois dimensions des yeux.

L'acquisition d'image de contexte, notamment d'un individu, par l'au moins un dispositif d'acquisition d'image contextuelle permet d'améliorer la précision de visée dans les trois dimensions du dispositif d'acquisition d'image du sous-système.

En d'autres termes, l'au moins un dispositif d'acquisition d'image contextuelle permet d'améliorer le suivi de l'individu par ledit sous-système si l'individu est en mouvement. Par exemple, l'au moins un dispositif d'acquisition d'image contextuelle est assujetti au support du système d'acquisition d'image par l'intermédiaire d'un cadre vertical encadrant le système d'acquisition d'image.

Dans un mode de réalisation, ledit système d'acquisition d'image comporte deux dispositifs d'acquisition d'image contextuelle.

Par exemple, un premier des deux dispositifs d'acquisition d'image contextuelle est positionné au-dessus du sous-système.

Par exemple, un second des deux dispositifs d'acquisition d'image contextuelle est positionné en-dessous du sous-système.

Par exemple, lesdits deux dispositifs d'acquisition d'image contextuelle sont centrés selon ledit axe de visée dudit dispositif d'acquisition d'image, c'est-à-dire disposés le long dudit axe de visée.

Un tel agencement des deux dispositifs d'acquisition d'image contextuelle permet d'améliorer la précision du sous-système et d'améliorer le centrage de l'image réfléchie par l'élément réfléchissant sur le dispositif d'acquisition d'image.

L'invention sera bien comprise et ses avantages apparaitront mieux à la lecture de la description détaillée qui suit, donnée à titre indicatif et nullement limitatif, en référence aux dessins annexés dans lesquels :
la figure 1 présente un système d'acquisition d'image selon un exemple de réalisation de l'invention ;
la figure 2, comportant les figures 2a, 2b et 2c, montre plus en détails un agencement de deux unités d'acquisition d'image du système d'acquisition d'image de la figure 1 ;
la figure 3 montre une vue arrière d'un système d'acquisition d'image selon un deuxième exemple de réalisation de l'invention ;
la figure 4 montre une vue de côté du système d'acquisition d'image de l'exemple de réalisation de la figure 3 ;
la figure 5 montre une vue de haut du système d'acquisition d'image de l'exemple de réalisation de la figure 3 ; et
la figure 6 montre une vue de face du système d'acquisition d'image de l'exemple de réalisation de la figure 3.

Les éléments identiques représentés sur les figures précitées sont identifiés par des références numériques identiques.

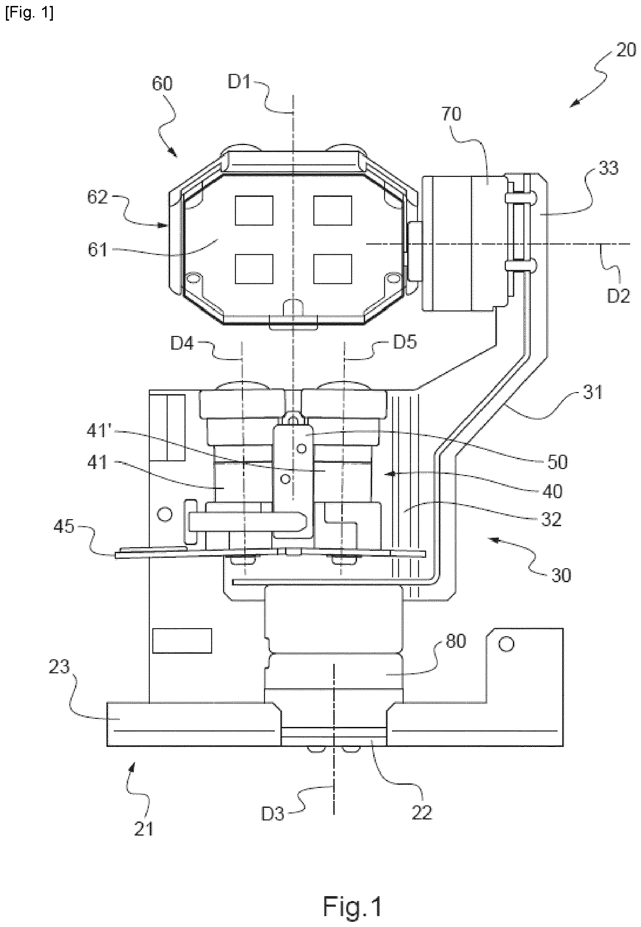

La figure 1 présente un système d'acquisition d'image 20 selon un exemple de réalisation de l'invention.

Dans l'exemple décrit, le système d'acquisition d'image 20 comporte un support 21.

Le support 21 comporte une première paroi 22 qui définit une surface de montage plane.

Le support 21 comporte une seconde paroi 23 orthogonale à la première paroi 22.

La seconde paroi 23 facilite ici l'installation du système à une unité de commande.

La seconde paroi 23 comporte ici un cadre 105 (non représenté sur la figure 1).

Dans l'exemple décrit, le système d'acquisition d'image 20 comporte un sous-système 30.

Le sous-système 30 est mobile en rotation selon un axe de rotation D3 par rapport au support 21.

Dans l'exemple décrit, le sous-système 30 comporte un dispositif d'acquisition d'image 40.

Le dispositif d'acquisition d'image 40 est configuré pour acquérir au moins une image selon un axe de visée D1.

Dans l'exemple décrit, l'axe de rotation D3 est parallèle à l'axe de visée D1 dudit dispositif d'acquisition d'image 40.

Le dispositif d'acquisition d'image 40 comporte ici une première unité d'acquisition d'image 41.

La première unité d'acquisition d'image 41 comporte un objectif 42 et un capteur 43 (non représentés sur la figure 1).

L'objectif 42 de l'au moins une unité d'acquisition d'image 41 focalise l'au moins une image sur le capteur 43 de l'au moins une unité d'acquisition d'image 41, et définit ainsi un axe optique D4.

En l'occurrence, le dispositif d'acquisition d'image 40 comporte en outre une deuxième unité d'acquisition d'image 41'.

La deuxième unité d'acquisition d'image 41' est ici identique à la première unité d'acquisition 41. Elle pourrait toutefois être différente.

Ainsi, un objectif de la deuxième unité d'acquisition d'image 41' définit ici un axe optique D5.

En l'occurrence, chaque axe optique D4, D5, respectivement des première et deuxième unités d'acquisition d'image 41, 41', divergent par rapport à l'axe de visée D1 dudit dispositif d'acquisition d'image 40 selon un angle d'écartement d'une valeur prédéterminée.

Dans d'autres termes, une distance d'écartement, entre chaque axe optique D4, D5 et l'axe de visée D1, augmente ici avec une distance par rapport à l'objectif respectif de l'au moins une première et au moins une deuxième unités d'acquisition d'image 41, 41'.

En l'occurrence, l'au moins une première et l'au moins une deuxième unités d'acquisition d'image ont ici des caractéristiques de sorte qu'en champ lointain, c'est-à-dire à au moins 1,2 m, la résolution est suffisante pour reconnaître un iris d'un individu, c'est-à-dire qu'un iris de 10,2 mm de diamètre soit imagé par 160 pixels.

En l'occurrence, l'au moins une première et l'au moins une deuxième unités d'acquisition d'image ont ici des caractéristiques de sorte qu'en champ proche, c'est-à-dire à environ 0,5 m maximum, le champ latéral des deux caméras combinées est suffisant pour capturer les deux yeux d'un individu, avec une marge permettant un défaut de pointage.

Les objectifs de l'au moins une première et de l'au moins une deuxième unités d'acquisition d'image sont choisis ici pour avoir une distance focale comprise entre 40 mm et 60 mm, par exemple d'environ 50 mm.

Dans l'exemple décrit, le sous-système 30 comporte un élément réfléchissant 60. L'élément réfléchissant 60 est agencé transversalement audit axe de visée D1. L'élément réfléchissant 60 est configuré pour réfléchir une image sur le dispositif d'acquisition d'image 40.

En l'occurrence, l'élément réfléchissant 60 réfléchit ici une image sur les première et deuxième unités d'acquisition d'image 41, 41' du dispositif d'acquisition d'image 40. L'élément réfléchissant 60 est monté mobile en rotation par rapport audit dispositif d'acquisition d'image 40, selon un axe de rotation D2.

L'axe de rotation D2 est orthogonal à l'axe de visé D1 du dispositif d'acquisition d'image 40.

En l'occurrence, l'élément réfléchissant 60 est ici de forme géométrique hexagonale, mais il pourrait être de toutes autres formes géométriques.

L'élément réfléchissant 60 comporte ici une surface réfléchissante 61 qui est configurée pour réfléchir une image.

L'élément réfléchissant 60 comporte en outre un boitier 62 configuré pour maintenir la surface réfléchissante 61 de l'élément réfléchissant 60, et par lequel l'élément réfléchissant 60 est actionné en pivotement.

Dans l'exemple décrit, le sous-système 30 comporte un moteur d'élément réfléchissant 70, appelé aussi moteur « tilt ».

Le moteur d'élément réfléchissant 70 est configuré pour pivoter ledit élément réfléchissant 60 par rapport au dispositif d'acquisition d'image 40 selon l'axe de rotation D2.

Le moteur d'élément réfléchissant 70 comporte par exemple une partie dite « fixe » assujettie à une armature 31 décrite ci-dessous, et une partie dite « mobile », configurée pour pivoter par rapport à la partie fixe, et à laquelle est assujetti l'élément réfléchissant 60.

En l'occurrence, le moteur d'élément réfléchissant 70 est ici un moteur à entraînement en prise directe de charge et préférentiellement sans balais ce qui diminue également l'usure et permet un pilotage très fluide, apte à répondre au besoin de suivi des yeux d'une personne en mouvement.

Dans l'exemple décrit, le système d'acquisition d'image 20 comporte un moteur de sous-système 80.

Le moteur de sous-système 80 est configuré pour pivoter le sous-système 30 par rapport au support 21 selon l'axe de rotation D3.

Le moteur de sous-système 80, appelé aussi « moteur panoramique », comporte par exemple une partie dite « fixe » assujettie au sous-système 30 et une partie dite « mobile » configurée pour pivoter par rapport à la partie fixe, et à laquelle est assujetti le support 21, notamment ici la première paroi 22.

Toutefois en variante, la partie fixe pourrait être assujettie au support 21 et la partie mobile pourrait être assujettie au sous-système 30.

En l'occurrence, le moteur de sous-système 80 est ici un moteur à entraînement en prise directe de charge, et préférentiellement sans balais ce qui diminue également l'usure et permet un pilotage très fluide, apte à répondre au besoin de suivi des yeux d'une personne en mouvement.

Dans l'exemple décrit, le sous-système 30 comporte l'armature 31.

Dans le présent exemple, le dispositif d'acquisition d'image 40, le moteur d'élément réfléchissant 70 et le moteur de sous-système 80 sont arrangés sur l'armature 31.

Le sous-système 30 est ici assujetti à la surface de montage de la première paroi 22 du support 21 par l'intermédiaire du moteur de sous-système 80, et l'élément réfléchissant 60 est assujetti à l'armature 31 du sous-système 30 par l'intermédiaire du moteur d'élément réfléchissant 70.

L'armature 31 est ici assujetti au moteur de sous-système 80, et plus particulièrement à la partie fixe du moteur de sous-système 80.

L'armature 31 du sous-système 30 comporte ici un corps principal 32 et un bras 33. Le corps principal 32 est ici configuré pour maintenir le dispositif d'acquisition d'image 40.

Le corps principal 32 a ici un profil rectangulaire.

Le bras 33 s'étend ici à partir du corps principal 32.

Le bras 33 est ici configuré pour maintenir le moteur d'élément réfléchissant 70, et plus particulièrement la partie fixe du moteur d'élément réfléchissant 70.

En l'occurrence, le bras 33 comporte ici une première partie s'étendant du corps principal 32 selon un angle de 45° avec l'axe de visée D1 du dispositif d'acquisition d'image 40 et comporte une seconde partie prolongeant la première partie parallèlement à l'axe de visée D1 du dispositif d'acquisition d'image 40. L'arrangement du bras 33 permet ainsi de centrer l'élément réfléchissant 60 par rapport à l'axe de visé D1 du dispositif d'acquisition d'image 40.

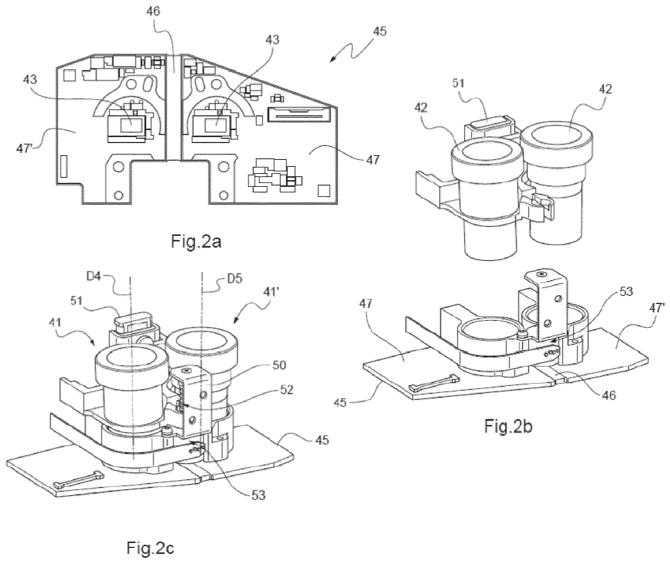

Les figure 2a, 2b, 2c montrent plus en détails l'agencement des deux unités d'acquisition d'image 41, 41' du système d'acquisition d'image 20 de la figure 1.

Dans l'exemple décrit, le dispositif d'acquisition d'image 40 comporte un support plié 45.

Le support plié 45 comporte au moins deux volets 47,47'.

Les au moins deux volets 47,47' supportent chacun un capteur 43 de l'au moins une première et de l'au moins une deuxième unités d'acquisition d'image 41, 41'.

Les au moins deux volets 47,47' sont reliés par au moins une zone charnière 46.

La zone charnière 46 est configurée pour que les au moins deux volets 47, 47' forment entre eux un angle de pliage.

En l'occurrence, la zone charnière 46 est ici configurée pour être fléchie, ou être courbée, ou être pliée, de sorte que les au moins deux volets forment entre eux un angle de pliage de valeur déterminée.

Cet angle de pliage permet ici de réaliser une orientation différente des deux capteurs 43, et permet notamment de faire diverger ici les axes optiques D4, D5 de l'au moins une première et de l'au moins une deuxième unité d'acquisition d'image 41, 41'.

En l'occurrence, le support plié 45 est ici une plaque de circuit imprimé, dit « PCB » dont l'au moins une zone charnière 46 a ici une épaisseur amincie par rapport à celle des au moins deux volets 47, 47'.

Dans l'exemple décrit, le sous-système 30 comporte un dispositif de translation 50.

Le dispositif de translation 50 est configuré pour translater au moins l'objectif 42 de l'au moins une première unité d'acquisition d'image 41 par rapport au capteur 43 de l'au moins une première unité d'acquisition d'image 41 selon l'axe de visée D1 du dispositif d'acquisition d'image 40, ce qui permet de régler la focalisation.

En l'occurrence, le dispositif de translation 50 est ici configuré pour translater simultanément l'objectif de chacune des première et deuxième unités d'acquisition d'image 41, 41' par un unique mouvement de translation, parallèlement à l'axe de visée D1.

Dans d'autres termes, les objectifs de chacune des première et deuxième unités d'acquisition d'image 41, 41'peuvent être translatés ensemble, ce qui permet d'obtenir un plan de netteté identique pour les deux unités d'acquisition d'image 41, 41', à un instant donné.

Dans le présent exemple de réalisation, le dispositif de translation 50 comporte une glissière 51, une vis sans fin 52 et un moteur pas à pas 53.

La glissière 51 est configurée pour supporter l'objectif 42 des première et deuxième unités d'acquisition d'image 41, 41'.

La vis sans fin 52 est configurée pour translater ladite glissière 51 selon l'axe de visée D1 dudit dispositif d'acquisition d'image 40.

Le moteur pas à pas 53 est configuré pour faire tourner ladite vis sans fin 52.

La glissière 51 comporte en outre un écrou (non représenté).

L'écrou est assujetti à la vis sans fin 52.

L'écrou est configuré pour être bloqué en rotation par la glissière 51 de sorte que la vis sans fin 52 fasse translater l'écrou, et donc la glissière 52, selon l'axe de visée D1.

Le dispositif de translation 50 permet ainsi une résolution de déplacement cohérente avec une profondeur de champ des objectifs 42.

Un tirage optique (distance objectif/capteur) du dispositif d'acquisition d'image 40 peut ainsi être ajusté de manière très précise grâce au dispositif de translation 50.

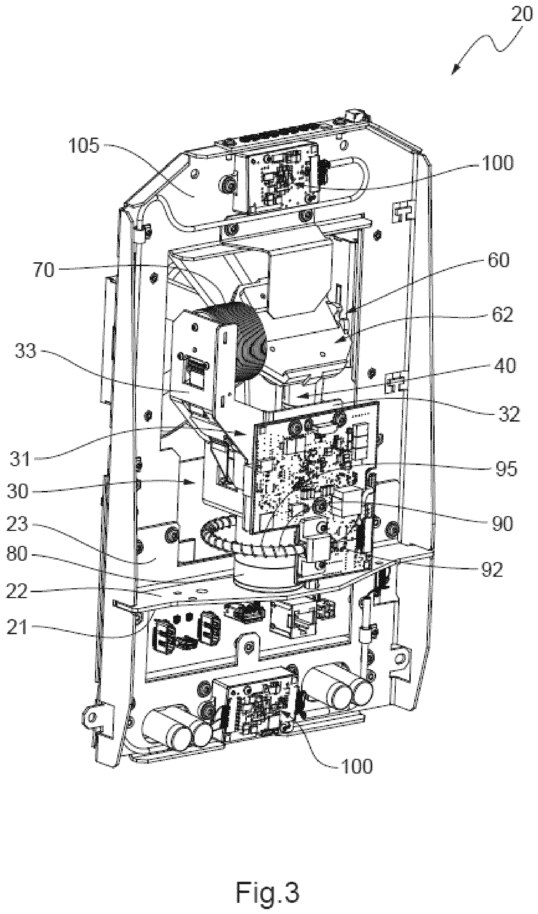

Les figures 3 à 6 présentent un système d'acquisition d'image 20 selon un autre exemple de réalisation de l'invention, comprenant les caractéristiques de l'exemple de réalisation illustré sur les figures 1 et 2, ainsi que des caractéristiques additionnelles décrites ci-après.

Dans cet exemple, le support 21 comporte en outre une interface électrique (non représentée).

L'interface électrique du support 21 est configurée pour communiquer avec une unité de commande extérieure au système d'acquisition d'image 20.

Dans cet exemple, le sous-système 30 comporte une interface électrique 92. L'interface électrique 92 du sous-système 30 est configurée pour assurer une communication et une distribution d'une alimentation électrique entre l'interface électrique du support 21 et le dispositif d'acquisition d'image 40, le moteur d'élément réfléchissant 70, le moteur de sous-système 80 et le moteur pas à pas 53.

Dans l'exemple décrit, le système d'acquisition d'image 20 comporte un élément de raccordement flexible 90.

L'élément de raccordement flexible 90 est configuré pour raccorder électriquement l'interface électrique du support 21 à l'interface électrique 92 du sous-système 30. L'élément de raccordement flexible 90 est agencé autour de l'axe de rotation D3.

En l'occurrence, l'élément de raccordement flexible 90 est agencé ici autour du moteur de sous-système 80.

L'élément de raccordement flexible 90 permet ici la transmission de divers signaux, et par exemple une alimentation électrique.

L'élément de raccordement flexible 90 est ici un cordon électrique, notamment de type micro-coaxial qui permet une impédance contrôlée, la transmission de divers signaux sur des distances suffisamment longues de l'ordre de 20 cm à 50 cm et de réduire le rayon de courbure du cordon électrique lors des mouvements, et utilisant notamment le protocole MIPI CSI.

En l'occurrence, l'interface électrique 92 du sous-système 30 est ici configurée au moins pour piloter le moteur d'élément réfléchissant 70, le moteur de sous-système 80 et le moteur pas à pas 53.

L'interface électrique 92 du sous-système 30 permet en outre ici de centraliser l'alimentation du sous-système 30, et notamment du moteur d'élément réfléchissant 70, du moteur de sous-système 80 et du moteur pas à pas 53.

En l'occurrence, l'interface électrique du support 21 est ici assimilable à une plateforme de traitement principale configurée au moins pour traiter l'au moins une image fournie par le dispositif d'acquisition d'image 40.

Dans l'exemple décrit, le système d'acquisition d'image 20 comporte un élément de guidage élastique 95.

L'élément de guidage élastique 95 est notamment configuré pour maintenir en place l'élément de raccordement flexible 90.

L'élément de guidage élastique 95 est ici agencé autour dudit élément de raccordement flexible 90.

L'élément de guidage élastique 95 comporte une première extrémité liée audit support 21 et une seconde extrémité liée audit sous-système 30.

L'élément de guidage élastique 95 est configuré pour être déformé élastiquement lors d'une rotation du sous-système 30 par rapport au support 21 selon l'axe de rotation D3.

En l'occurrence l'élément de guidage élastique 95 comporte ici un ressort.

Dans l'exemple décrit, le système d'acquisition d'image 20 comporte au moins un dispositif d'acquisition d'image contextuelle 100.

L'au moins un dispositif d'acquisition d'image contextuelle 100 est configuré pour acquérir au moins une image de contexte, c'est-à-dire une image ayant un champ de capture plus grand que l'au moins une image obtenue par le dispositif d'acquisition d'image 40, de sorte à pointer ensuite le dispositif d'acquisition d'image 40 avec précision.

L'au moins un dispositif d'acquisition d'image contextuelle 100 permet notamment ici de choisir et de localiser avec précision un visage, ou les yeux d'un individu.

L'au moins un dispositif d'acquisition d'image contextuelle 100 est fixé audit support 21.

En l'occurrence, le système d'acquisition d'image 20 comporte ici un premier et un deuxième dispositifs d'acquisition d'image contextuelle 100.

Le premier et le deuxième dispositifs d'acquisition d'image contextuelle 100 permettent notamment ici de réaliser une localisation des yeux d'un individu par stéréoscopie.

Le premier et le deuxième dispositifs d'acquisition d'image contextuelle 100 sont notamment agencés pour être suffisamment écartés l'un de l'autre pour obtenir une précision de localisation suffisante des yeux d'un individu dans trois dimensions.

Le sous-système 30 est ici disposé entre le premier dispositif d'acquisition d'image contextuelle 100 et le deuxième dispositif d'acquisition d'image contextuelle 100.

Les premier et deuxième dispositifs d'acquisition d'image contextuelle 100 sont ici centrés sur l'axe de visée D1 dudit dispositif d'acquisition d'image 40.

En l'occurrence, les premier et deuxième dispositifs d'acquisition d'image contextuelle 100 sont assujettis au support 21 par l'intermédiaire du cadre 105.

Le cadre 105 encadre ici entièrement le sous-système 30.

Dans d'autres termes, le premier dispositif d'acquisition d'image contextuelle 100 est situé au-dessus du sous-système 30, alors que le deuxième dispositif d'acquisition d'image contextuelle 100 est situé en dessous du sous-système 30.

En l'occurrence, le cadre 105 comporte ici en outre une signalétique lumineuse configurée pour guider un regard d'un individu vers le premier dispositif d'acquisition d'image contextuelle 100.

Cette signalétique lumineuse permet notamment ici de garantir un centrage du regard de l'individu sur une photo de son visage et que les iris de l'individu soient orientés vers le dispositif d'acquisition d'image 40.

En l'occurrence, l'interface électrique du support 21 est ici assimilable à une plateforme de traitement principale configurée au moins pour traiter l'au moins une image fournie par le dispositif d'acquisition d'image 40, l'au moins une image fournie par l'au moins un dispositif d'acquisition d'image contextuelle 100 et gérer la signalétique lumineuse.

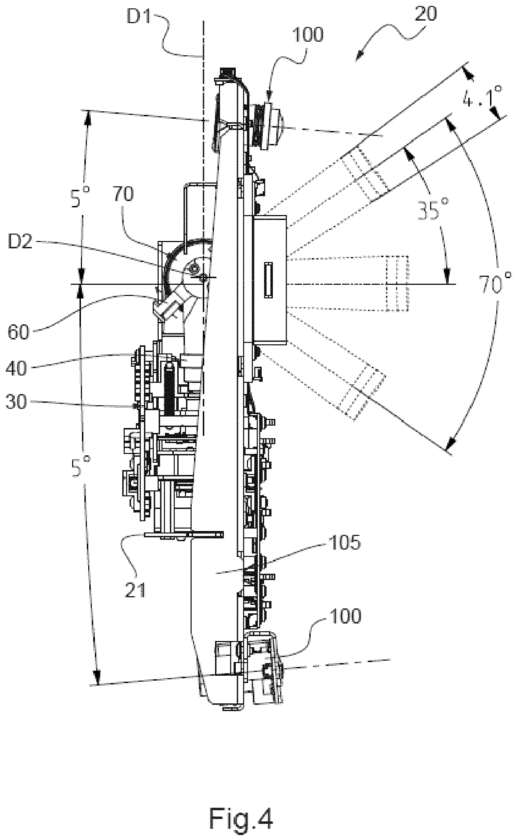

Tel qu'illustré sur la figure 4, le dispositif d'image 40 a un champ de capture vertical qui dépend du mouvement de rotation de l'élément réfléchissant 60 selon l'axe de rotation D2.

L'élément réfléchissant 60 est configuré ici pour avoir une plage de débattement d'environ 70° selon l'axe de rotation D2, et avoir notamment un débattement de plus ou moins 35° par rapport à une position de centrage nominal à 45° selon un plan nominal incluant l'axe D2 et orthogonal à l'axe de visée D1.

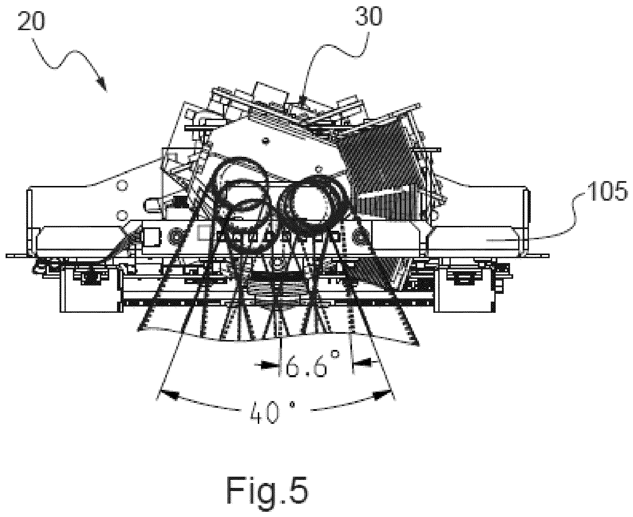

Tel qu'illustré sur la figure 5, le dispositif d'image 40 a un champ de capture horizontal qui dépend du mouvement de rotation du sous-système 30 selon l'axe de rotation D3. Le sous-système 30 est configuré ici pour avoir une plage de débattement d'environ 40° selon l'axe de rotation D3, préférentiellement un débattement symétrique par rapport à cet axe D3 de plus ou moins 20° pour balayer la scène horizontalement.

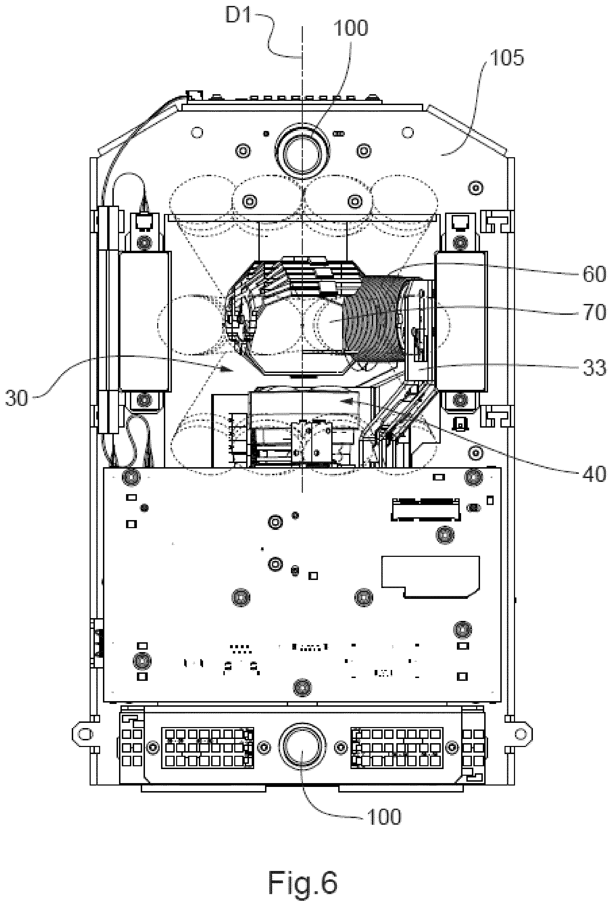

La figure 6 illustre le champ de capture global du système d'acquisition d'image 20 obtenu en combinant la plage de débattement de l'élément réfléchissant 60 selon l'axe de rotation D2 et la plage de débattement du sous-système 30 selon l'axe de rotation D3.

## Revendications

1. Système d'acquisition d'image (20), comportant un support (21) et un sous-système (30) monté sur le support (21), ledit sous-système (30) comportant un dispositif d'acquisition d'image (40) configuré pour acquérir au moins une image selon un axe de visée (D1), un élément réfléchissant (60) agencé transversalement audit axe de visée (D1) et configuré pour réfléchir l'au moins une image sur ledit dispositif d'acquisition d'image (40), ledit élément réfléchissant (60) étant monté mobile en rotation, selon un premier axe de rotation (D2), par rapport audit dispositif d'acquisition d'image, le premier axe de rotation (D2) étant orthogonal audit axe de visée (D1) dudit dispositif d'acquisition d'image (40) et dans lequel ledit sous-système (30) est monté mobile en rotation par rapport audit support (21) selon un deuxième axe de rotation (D3), le deuxième axe de rotation (D3) étant parallèle audit axe de visée (D1) dudit dispositif d'acquisition d'image (40).

2. Système d'acquisition d'image selon la revendication 1, dans lequel ledit dispositif d'acquisition d'image (40) comporte au moins une première unité d'acquisition d'image (41), ladite au moins une première unité d'acquisition d'image (41) comportant un capteur (43) et un objectif (42), l'objectif (42) focalisant l'au moins une image sur le capteur (43), l'objectif (42) définissant un axe optique (D4) de la première unité d'acquisition d'image (41).

3. Système d'acquisition d'image selon la revendication 2, dans lequel ledit dispositif d'acquisition d'image (40) comporte au moins une deuxième unité d'acquisition d'image (41'), ladite deuxième unité d'acquisition d'image (41') comportant un capteur (43) et un objectif (42), l'objectif (42) de la deuxième unité d'acquisition d'image (41') focalisant l'au moins une image sur le capteur (43) de la deuxième unité d'acquisition d'image (41'), l'objectif (42) de la deuxième unité d'acquisition d'image (41') définissant un axe optique (D5) de la deuxième unité d'acquisition d'image (41'), et dans lequel l'axe optique (D4) de ladite première unité d'acquisition d'image (41) et l'axe optique (D5) de ladite deuxième unité d'acquisition d'image (41') divergent par rapport audit axe de visée (D1) dudit dispositif d'acquisition d'image (40) selon un angle d'écartement d'une valeur prédéterminée.

4. Système d'acquisition d'image selon la revendication 3, dans lequel ledit dispositif d'acquisition d'image (40) comporte un support plié (45) comportant au moins deux volets (47, 47'), un premier (47) des deux volets supportant le capteur (43) de la première unité d'acquisition d'image (41) et un deuxième (47') des deux volets supportant le capteur (43) de la deuxième unité d'acquisition d'image (41'), lesdits au moins deux volets (47, 47') étant reliés l'un à l'autre par au moins une zone charnière (46), ladite zone charnière (46) étant configurée pour que lesdits deux volets (47, 47') forment entre eux un angle de pliage.

5. Système d'acquisition d'image selon l'une quelconque des revendications 2 à 4, dans lequel ledit dispositif d'acquisition d'image (40) comporte un dispositif de translation (50) configuré pour translater au moins ledit objectif (42) de ladite au moins une première unité d'acquisition d'image (41) par rapport audit capteur (43) de ladite au moins une première unité d'acquisition d'image (41) selon ledit axe de visée (D1) dudit dispositif d'acquisition d'image (40).

6. Système d'acquisition d'image selon la revendication 5, dans lequel ledit dispositif de translation (50) est en outre configuré pour translater ledit objectif (42) de ladite au moins une deuxième unité d'acquisition d'image (41') par rapport audit capteur (43) de ladite au moins une deuxième unité d'acquisition d'image (41') selon ledit axe de visée (D1) dudit dispositif d'acquisition d'image (40).

7. Système d'acquisition d'image selon l'une quelconque des revendications 1 à 6, qui comporte un moteur d'élément réfléchissant (70) configuré pour pivoter ledit élément réfléchissant (60) selon ledit premier axe de rotation (D2) et un moteur de sous-système (80) configuré pour pivoter ledit sous-système (30) selon ledit deuxième axe de rotation (D3).

8. Système d'acquisition d'image selon l'une quelconque des revendications 1 à 7, dans lequel le support (21) comporte une interface électrique et le sous-système (30) comporte une interface électrique (92), et le système d'acquisition d'image (20) comporte un élément de raccordement flexible (90) configuré pour raccorder électriquement l'interface électrique dudit support (21) à l'interface électrique (92) dudit sous-système (30), ledit élément de raccordement flexible (90) étant agencé autour dudit deuxième axe de rotation (D3).

9. Système d'acquisition d'image selon la revendication 8, qui comporte un élément de guidage élastique (95) agencé autour dudit élément de raccordement flexible (90), ledit élément de guidage élastique (95) comportant une première extrémité liée audit support (21) et une seconde extrémité liée audit sous-système (30), ledit élément de guidage élastique (95) étant configuré pour être déformé élastiquement lors d'une rotation du sous-système (30) selon le deuxième axe de rotation (D3) par rapport au support (21).

10. Système d'acquisition d'image selon l'une quelconque des revendications 1 à 9, qui comporte au moins un dispositif d'acquisition d'image contextuelle (100) configuré pour acquérir au moins une image de contexte, ledit au moins un dispositif d'acquisition d'image contextuelle (100) étant fixé audit support (21).
